(19) **Europäisches Patentamt** / **European Patent Office** / **Office européen des brevets**

(11) **EP 2 743 377 A1**

(12) # EUROPEAN PATENT APPLICATION
published in accordance with Art. 153(4) EPC

(43) Date of publication:
**18.06.2014  Bulletin 2014/25**

(51) Int Cl.:
***C23C 22/68*** (2006.01)  ***C23C 22/83*** (2006.01)
***B82Y 30/00*** (2011.01)

(21) Application number: **12775054.5**

(22) Date of filing: **13.08.2012**

(86) International application number:
**PCT/IB2012/054103**

(87) International publication number:
**WO 2013/021368 (14.02.2013 Gazette 2013/07)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **11.08.2011  PT 2011105853**

(71) Applicant: **Universidade de Aveiro**
**Aveiro 3810-193 (PT)**

(72) Inventors:
- **SILVA FERREIRA, Mário Guerreiro**
  **P-1000-268 Lisboa (PT)**
- **DA COSTA TEDIM, João André**
  **P-3800-205 Esgueira - Aveiro (PT)**
- **ZHELUDKEVICH, Mikhail**
  **P-3810-465 Aveiro Quinta do Picado (PT)**

(74) Representative: **Ferreira, Maria Silvina**
**Clarke, Modet & Co.**
**Rua Castilho, 50-9°**
**1269-163 Lisboa (PT)**

(54) **CONVERSION FILMS BASED ON LAMELLAR DOUBLE-HYDROXIDES FOR ACTIVE PROTECTION AGAINST CORROSION**

(57)     The present invention refers to conversion films based on double layered hydroxides (LDHs), which are obtained by a simple hydrothermal process. The differentiation of film morphology at microscale can be obtained by control over the conditions used in the preparation process.

The obtained films show active corrosion protection functionality for the first time, which is associated with intercalation of corrosion inhibitors in the LDH structure. The anti-corrosion performance is associated with the controlled release of inhibitors, accompanied by the entrapment of aggressive species for the substrate (e.g. chloride) in LDHs.

The present invention is useful for industrial application in the area of corrosion protection of metallic substrates.

Figure 1

## Description

## Technical Domain of the Invention

The present invention concerns both conversion films based on layered double hydroxides and the process of preparation, since the referred conversion films present active corrosion protection functionality, grown directly from the metallic substrates.

## Summary of the Invention

The goal of the present invention is the development of conversion films based on layered double hydroxides (LDHs), incorporating corrosion inhibitors in LDH nanocrystals (new product), obtained by a new hydrothermal process (new methodology). The films can be obtained with variable thickness and morphology - from LDHs islands (8 micrometre thick) surrounded by a thin film of LDHs over the surface (1-2 micrometre thick), to more thick and uniform films (microscale) - depending on the control of temperature and hydrothermal treatment (50°C, 100°C; 4-24 hours), pH (6-7) and reactant concentration (5-500 mM). The intercalation of corrosion inhibitors in LDHs was proved for the first time. The anticorrosion performance of the resulting films is more effective in presence than in absence of corrosion inhibitors. For long times of immersion (1 month) in a solution of aggressive electrolyte for the metallic substrates, the films with inhibitors maintain the protection of the metallic substrate against corrosion in a high level, whereas for LDH films without inhibitors the anticorrosion properties decrease with time of immersion. For instance, in the presence of vanadate inhibitors, the resistance against corrosion provided by LDH films (determined by electrochemical techniques) can be a order of magnitude (10 times) superior with respect to LDH films without inhibitor and two orders of magnitude superior when compared to the metallic substrate without any LDH film.

The present invention is useful for industrial application in corrosion protection of metallic substrates.

## Prior Art

There are several scientific publications available in literature reporting the formation of LDH conversion films in metallic substrates ("Characterization of Mg, Al-hydrotalcite conversion film on Mg alloy and Cl- and CO32-anion-exchangeability of the film in a corrosive environment", J.K. Lin, C.L. Hsia and J.Y. Uan, Scripta Materialia 56 (2007) 927-930; "Corrosion Resistance of Superhydrophobic Layered Double Hydroxide Films on Aluminum", F. Zhang, L. Zhao, H. Chen, S. Xu, D. G. Evans, X. Duan, Angew. Chem. Int. Ed. 47 (2008) 2466 -2469; "Corrosion-Resistant, Chromate-Free Talc Coatings for Aluminum", R.G. Buchheit, M.D. Bode, G.E. Stoner, Corrosion 50 (1994), 205-214; "Direct growth of oriented Mg-Al layered double hydroxide film on Mg alloy in aqueous HCO3-/CO32- solution", J.-Y. Uan, J.-K. Lin, Y.-S. Tung, J. Mater. Chem. 20 (2010) 761-766; "Effect of Na2CO3 on corrosion resistance of cerium conversion film on Mg-Gd-Y-Zr magnesium alloy surface", J.-I. Yi, X.-m. Zhang, M.-a. Chen, R. Gu, Scripta Materialia 59 (2008) 955-958; "Fabrication of hydrophobic surface with hierarchical structure on Mg alloy and its corrosion resistance", J. Wang, D. Li, Q. Liu, X. Yin, Y. Zhang, X. Jing, M. Zhang, Electrochimica Acta 55 (2010) 6897-6906; "Fabrication of oriented layered double hydroxide films by spin coating and their use in corrosion protection", F. Zhang, M. Sun, S. Xu, L. Zhao, B. Zhang, Chemical Engineering Journal 141 (2008) 362-367; "Facile Fabrication and Wettability of Nestlike Microstructure Maintained Mixed Metal Oxides Films from Layered Double Hydroxide Films Precursors", H. Chen, F. Zhang, S. Xu, D. G. Evans, X. Duan, Ind. Eng. Chem. Res. 47 (2008) 6607-6611; "Formation and Characteristics of Al-Zn Hydrotalcite Coatings on Galvanized Steel", R.G. Buchheit H. Guan, JCT Research 1 (2004) 277-290; "Formation of Mg,Al-hydrotalcite conversion coating on Mg alloy in aqueous HCO3-/CO32- and corresponding protection against corrosion by the coating", J.K. Lin, J.Y. Uan Corrosion Science 51 (2009) 1181-1188; "Hydrotalcite Coating Formation on Al-Cu-Mg Alloys from Oxidizing Bath Chemistries", W. Zhang, R.G. Buchheit, Corrosion 58 (2002) 591-600, "Hydrotalcite conversion coating on Mg alloy and its corrosion resistance" J. Wang, D. Li, X. Yu, X. Jing , M. Zhang, Z. Jiang, Journal of Alloys and Compounds 494 (2010) 271-274; "In Situ Microstructure Control of Oriented Layered Double Hydroxide Monolayer Films with Curved Hexagonal Crystals as Superhydrophobic Materials" H. Chen, F. Zhang, S. Fu, X. Duan, Adv. Mater. 18 (2006) 3089-3093; "One-Step Hydrothermal Crystallization of a Layered Double Hydroxide/Alumina Bilayer Film on Aluminum and Its Corrosion Resistance Properties", X. Guo, S. Xu, L. Zhao, W. Lu, F. Zhang, D. G. Evans, X. Duan, Langmuir 25 (2009) 9894-9897; "Performance of Hydrotalcite Conversion Treatments on AA2024-T3 When Used in a Coating System", R.B. Leggat, W. Zhang, R.G. Buchheit, S.R. Taylor, Corrosion 58 (2002) 322-328). Nonetheless, the present invention reports active protection provided by LDH films for the first time, which is due to the presence of corrosion inhibitors and to the possibility of differentiating the LDH films at microscale.

In a similar way, patents found disclose the formation of LDH conversion films using relatively complex methodologies, without presenting the intercalation of corrosion inhibitors as entity responsible to provide protection to the substrate ("Preparation of uniform anticorrosive hydrotalcite film by spin-coating pre-treated magnesium alloy sample plate using layered double hydroxides colloidal solution", Patent Number(s): CN101050539-A; CN100497745-C, Inventor(s): ZHANG F, SUN M, DUAN X, XU S, ZHAO L; "Method of preparing composite metal oxide thin film using hydrotalcite analog as precursor", Patent Number(s):

CN1908244-A, Inventor(s): DUAN X, YANG L, TIAN Y, ZHANG F; "Corrosion resistant hydrotalcite/polyelectrolyte composite film and preparation method thereof", Patent Number(s): CN 101519782-A, Inventor(s): XU CHEN, YU LEI, WENSHENG YANG; "Preparation method of corrosion resistant hydrotalcite-like film at surface of aluminum and aluminum alloy parts", Patent Number(s): CN 101285185-A, Inventor(s): FAZHI ZHANG, LILI ZHAO, SAILONG XU, XUE DUAN; "Method for increasing the corrosion resistance of aluminum and aluminum alloys", Patent Number(s): US RE35576-E, Inventor(s): BUCHHEIT JR RUDOLPH G, STONER GLENN E; "Method for increasing the corrosion resistance of aluminum and aluminum alloys", Patent Number(s): US 5266356-A, Inventor(s): BUCHHEIT JR RUDOLPH G, STONER GLENN E).

The patent "Method for electrodepositing inhibitor anion intercalation on surface of magnesium alloy", Patent Number(s): CN 101597783-A, Inventor(s) XIANG YU, JUNQING LI, WANG JUN, XIAOYAN JING, MILIN ZHANG; discloses a method for electrodeposition of LDHs with corrosion inhibitors incorporated, wherein LDHs are pre-formed before being applied to the metallic substrate surface using electrochemical methods. However, the present invention reports the process of formation of LDH films in situ, without any application of electrochemical techniques, wherein the metallic substrate supplies part of reactants used in the LDH growth.

Two scientific papers have information which was used in the preparation of LDH films in the present invention. In the paper "Corrosion Resistance of Superhydrophobic Layered Double Hydroxide Films on Aluminum", F. Zhang, L. Zhao, H. Chen, S. Xu, D. G. Evans, X. Duan, Angew. Chem. Int. Ed. 47 (2008) 2466 -2469, the inventors took the idea of using an optimum pH range for the $Zn(NO_3)_2$ solution as source of one of the reactants for the formation of LDHs, while from the paper "Active protection coatings with layered double hydroxide nanocontainers of corrosion inhibitor", M.L. Zheludkevich, S.K. Poznyak, L.M. Rodrigues, D. Raps, T. Hack, L.F. Dick, T. Nunes, M.G.S. Ferreira, Corros. Sci. 52 (2010) 602-611, the optimum pH range for intercalation of a specific inhibitor (vanadate) in LDH films was used.

### General Description of the Invention

The present invention reports the development of films based on layered double hydroxides (LDHs), intercalated with corrosion inhibitors. The active protection rendered by the presence of inhibitors is proved for the first time for conversion films of this type.

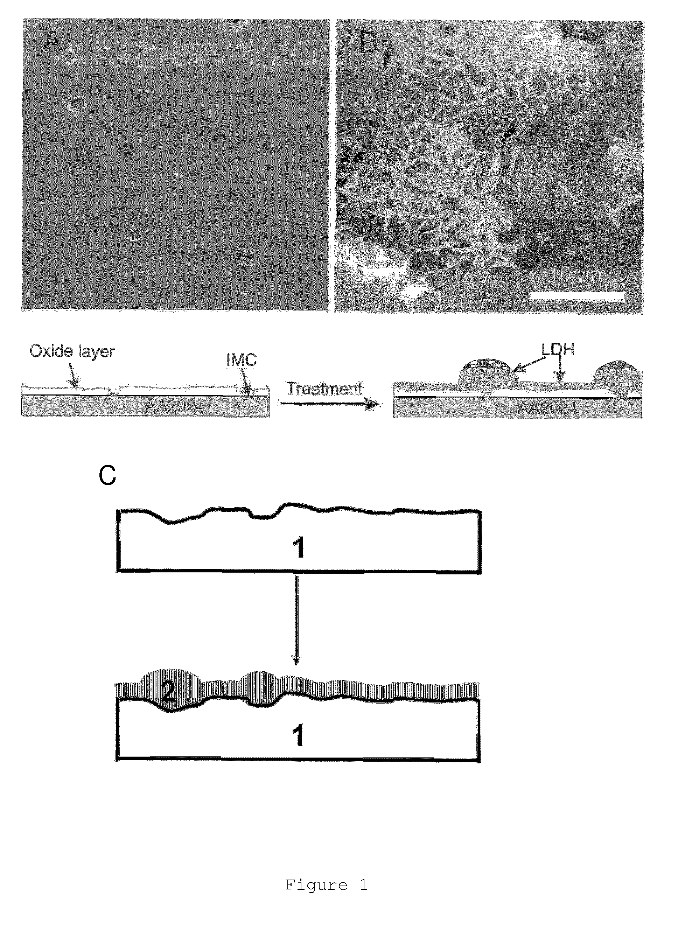

The novelty of the present invention is the direct growth in the metallic substrate of a nanostructured layer of film using crystallites of LDH as building block units, (Figures 1A and 1B). A great advantage associated with the growth of these films direct from the substrate with respect to application of coating layers is the superior adhesion in the former case.

Additionally, there is a gain in terms of inhibitor content and its proximity to the sites where it is most needed; the metallic surface. This functional layer can be considered as a smart reservoir, with ability to control the release of active species. From a corrosion standpoint, such functional layers can have a great impact in industry worldwide, mainly as an effective replacement for conventional pre-treatments on metallic substrates.

The applied methodology exploits the weakness of the native aluminium oxide layer in the zones of intermetallic phases which are the most susceptible for localised corrosion attack. The source of aluminium cations necessary to grow the LDHs on the alloy surface is uneven, promoting differentiated growth of LDHs on active intermetallics.

The loading of corrosive inhibitor into the intergallery space of LDHs by ion exchange reaction creates nanostructured container islands on the active zones. With this approach, successful intercalation of corrosion inhibitor is achieved and the active corrosion protection is demonstrated for the first time.

### 1. Problems that the invention will solve / minimise and advantages / disadvantages in comparison to technologies known

Problem: corrosion of metallic substrates.

Advantages: simple process for formation of conversion films that work as reservoir for inhibitors.

Disadvantage: for high-performance applications the modified substrate needs to be coated with additional coating layers in order to optimize and prolong the protective action over time.

### 2. Complexity of implementation of invention by third parties

Development stage.

The described procedure for film development is simple from application point of view. The implementation from the results presented is more difficult.

### 3. Commercialization

Simple, innovative and cost-effective methodology when compared with existing technologies, environmentally-friendly, and based on the concept of smart nanocontainers for controlled release of corrosion inhibitors. Partnerships predicted with aeronautical and automotive industries. Potential clients: worldwide producers of pre-treatments for metallic substrates.

### Description of the Figures

For easier understanding of the present invention it is attached figures representing preferable implementations of the invention which, however, does not intend to limit the extension of it.

**Figure 1.** SEM (scanning electron microscopy) images of substrate (A) and substrate coated with Zn-Al LDHs intercalated with $V_2O_7^{4-}$ (B). (C) Scheme of LDH films selectively deposited. Formation of LDH films (2) on metallic substrates (1).

**Figure 2.** XRD data (XRD patterns) of the samples in aluminium alloy 2024 (AA2024): blank surface (1), covered with $Zn(2)Al-NO_3$ (2), covered with $Zn(2)Al-V_2O_7$: as-prepared (3), covered with $Zn(2)Al-V_2O_7$ as-prepared and immersed in 0.05 M NaCl for 2 weeks (4) and for 1 month (5). Inset shows the patterns at the ranges of (003) and (006) diffraction reflections. The reflections originated from the intermetallic inclusions in AA2024 are also indicated.

**Figure 3.** SEM images (cross section) of Zn-Al LDH intercalated with $V_2O_7^{4-}$ (A) and corresponding EDS analysis (B). Individual EDS maps for elements Al, Zn, V and Cu are also presented.

**Figure 4.** Photographs acquired for AA2024 plates in the beginning (1) and after 1 month (2) of immersion in 0.05 M NaCl: (A) metallic substrate, (B) substrate covered by LDH-$NO_3$ and (C) LDH-$V_2O_7$.

**Figure 5.** SEM images of AA2024 plate covered with Zn-Al-$V_2O_7$ LDHs presented in Figure 3C before (A, C) and after immersion in 0.05 M NaCl during 1 month (B, D).

**Figure 6.** Electrochemical impedance spectroscopy (EIS) spectra of AA2024 plates immersed in 0.05 M NaCl for different times.

**Figure 7.** Evolution of coating resistance ($R_{coat}$), oxide resistance ($R_{ox}$) and polarization resistance ($R_{pol}$) during immersion time in 0.05 M NaCl. Parameters extracted from fittings of EIS spectra.

**Detailed Description of the Invention**

1) Sample preparation

AA2024 plates as described in Figure 1C with the reference number 1 are washed with ultrapure water, followed by ethanol (or propanol) for removal of particles and grease. The samples can be treated in different ways to promote only alkaline treatment (0.1 M NaHO, 1-2 minutes) or alkaline and acid treatment (0.1 M NaHO 2 minutes followed by 0.1 M $HNO_3$ 8 minutes). Between successive steps the samples are washed with ultrapure water. In the end, samples are immersed in ethanol/propanol, subjected to ultra-sound for 5 minutes and then dried in air.

2) Synthesis of differentiated LDH films

AA2024 plates are inserted in upright position in flasks with a $Zn(NO_3)_2$ solution with variable concentration (5-500 mM) and pH adjusted for neutral range (pH=6-7). The flask is then closed and placed in water bath at 100°C for 4 hours. Then, the plates are removed and thoroughly washed with ultrapure water, ethanol/propanol and dried in air.

3) Intercalation of corrosion inhibitors (e.g. vanadates)

The plated coated with LDHs as described in Figure 1C with the reference number 2 are then immersed in a 0.1 M $NaVO_3$ solution and adjusted pH (pH=8.4) which is then placed in water bath for 4 hours at 50 °C. Subsequently the samples are removed and thoroughly washed with water, ethanol/propanol and dried in air

Areas of application: pre-treatments, conversion films for substrates used in aeronautical, automotive, maritime and heavy industry in general. Metallic implants and prosthetics.

Active species that can be intercalated: corrosion inhibitors, biocides and other substances biologically active.

**Application examples**

For easier understanding of the present invention it is described examples of preferable implementations of the invention which, however, does not intend to limit the extension of it.

**Results and Discussion**

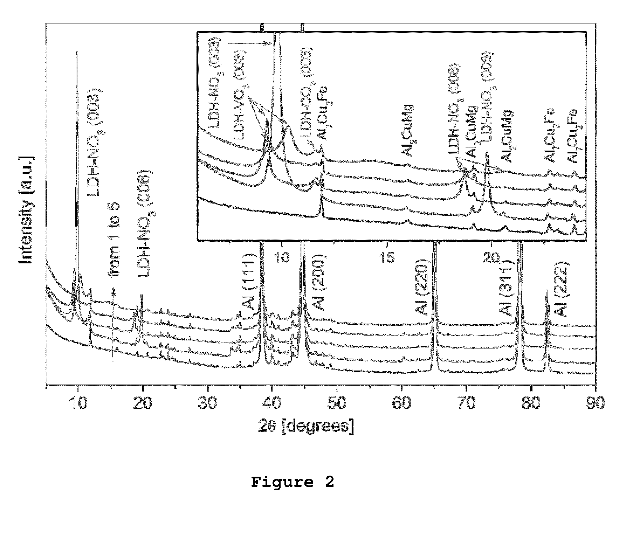

The LDH layers with nitrate anions were deposited on aluminium alloy surface and later loaded and consequently vanadate anions inserted in LDH via ion-exchange route with nitrate. XRD patterns of the samples are depicted in Figure 2. In the samples with LDH-containing layers, well-resolved reflections typical of LDH phases are observed, along with the reflections intrinsic to the AA2024 alloy. Positions of the characteristic LDH reflections (003) and (006) of both as-prepared nitrate- and vanadate-containing samples (labelled as (2) and (3), respectively) were found to be in agreement with those previously observed in polycrystalline LDH powders with the same compositions, namely $Zn(2)-Al-NO_3$ and $Zn(2)-Al-V_2O_7$. Moreover, no trace of the precursor LDH-$NO_3$ phase has been revealed in the XRD pattern of $Zn(2)-Al-V_2O_7$, which means that the anion-exchange reaction $NO_3^- \rightarrow V_2O_7^{4-}$ was complete. This is the first time that a LDH layer with structurally intercalated corrosion inhibitors is obtained on the metal surface. Additionally, a small diffraction peak was observed at ~11.5°, exhibiting similar intensity for all the LDH-containing samples in the peaks assigned to the (003) reflection of a phase of Zn(2)-Al-CO$_3$ composition (see inset in Figure 2). This is due to the fact that the synthesis was carried out in normal atmospheric conditions, leading to partial carbonation of the samples. Although CO$_3^{2-}$ is not a corrosion inhibitor per se, it can improve protective properties via formation of a very stable LDH structure and the permeation of such structures by anion-exchange (e.g. with corrosion-relevant anions) is unlikely to occur to a great extent. Besides, contamination with CO$_2$ can be avoided if additional precautions during the experimental procedure are taken, similarly to those followed in the preparation of LDH powders.

The morphology and composition of the AA2024 surface after substrate preparation and LDH layer formation is also depicted in Figure 1. After the substrate preparation (panel A) the surface is flat with some holes corresponding to the removal of S-type intermetallic phases (IMC). After the formation of LDH-V$_2$O$_7$ the morphology becomes completely different. The top view image depicted in panel B shows a differentiated surface where micro-sized, nanostructured islands are dispersed and separated by a thin layer covering the rest of the surface. The flake-like morphology typically found for LDH powders is also observed in the case of LDH deposited layer, both in the islands and in the 'flat' areas. Such an oriented plate structure is correlated with the faster crystal growth rate in the direction of bulk solution where the reactants are most accessible and the spatial restriction for growth is smaller.

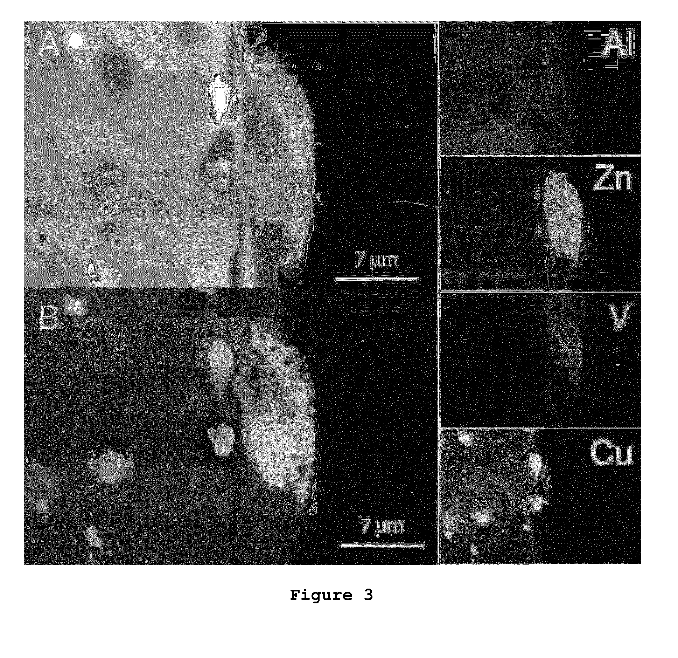

The cross section of a LDH island is presented in detail in Figure 3 (panel A) with the corresponding EDS analysis (panel B). Analysis of composition of the island reveals the presence of the main expected constituents: zinc, aluminium and vanadium, which supports the presence of LDHs intercalated with corrosion inhibitors. The thin LDH layer seems to be at least 4 times thinner (1-2 $\mu$m) than the LDH islands (8 $\mu$m). Furthermore, looking at the EDS map the LDH island has been grown on top of a site where intermetallic phases (IMC) existed - for that reason Cu is detected. It is known that the natural-occurring aluminium oxide film in aluminium alloys breaks down in the vicinity of IMC particles. Consequently, the surface distribution of these LDH architectures reflects the availability of Al-soluble species: the dissolution rate of aluminium in the places of IMC is known to be much faster than on the rest of the surface. The selective growth of LDHs at microscale in the most active zones is intrinsic to the structure of the AA2024 alloy, but can be carefully controlled by the manipulation of synthesis conditions including concentration of reactants and pH.

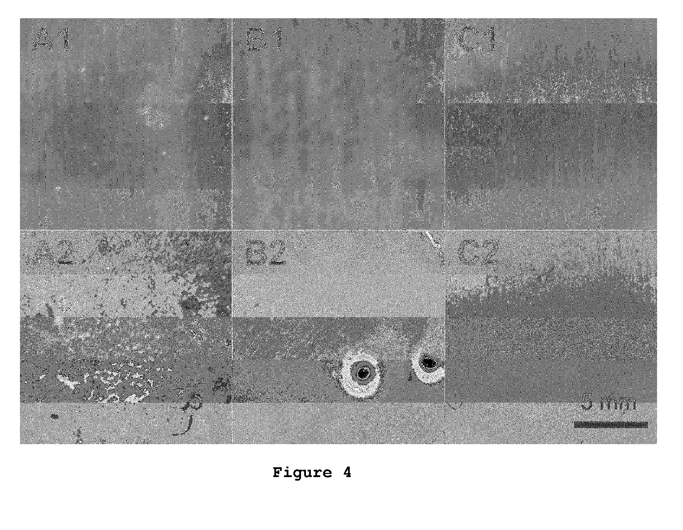

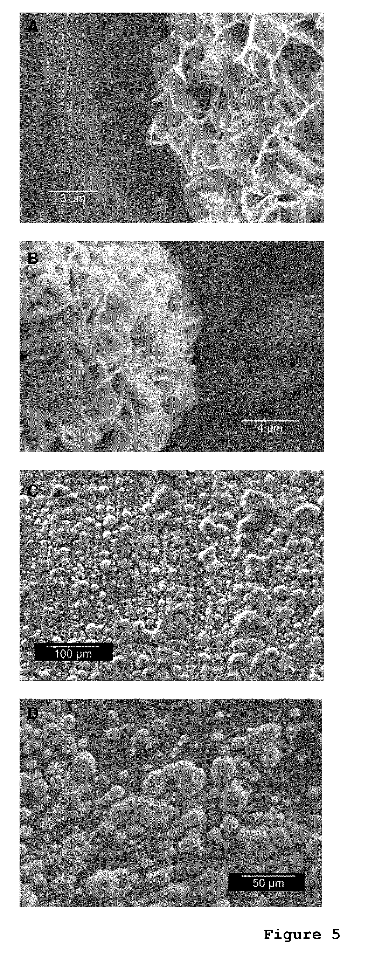

The anticorrosion performance of uncoated and coated AA2024 plates was evaluated after immersion in 0.05 M NaCl solution. Optical photographs as described in Figure 4 were acquired at specific immersion times (after 25 minutes and 1 month of immersion) for all the samples. In the case of bare metal (panels A1 and A2) some small white deposits can already be detected for very short immersion times, indicating the initiation of corrosion processes. After 1 month of immersion, the evidence of corrosion is much more pronounced with the entire surface completely corroded, exhibiting several black pits and compact deposits of white corrosion products over the exposed surface. Contrastingly, the plates coated with LDH films barely show any signs of corrosion. In the case of LDHs intercalated with NO$_3^-$, only two black pits surrounded by white deposits of corrosion products are observed after 1 month of immersion (B1 and B2), whereas in the case of LDH-V$_2$O$_7$ the surface is intact except one minor passivated pit (not presented in the picture), indicating the superior corrosion protection due to ion-exchange driven release of corrosion inhibitor entrapped in the LDH structure (C1 and C2). The sample C was studied before and after immersion in NaCl solution by SEM as described in Figure 5. As it can be seen, there is not any change neither in terms of individual LDH islands (panels A, B) nor in the general morphology of the LDH layer (panels C, D). Besides, the absence of small pits evidences the anticorrosion performance conferred by the LDHs layer to the aluminium substrate.

The LDH-containing samples were also characterized with XRD in different stages of the immersion to confirm the smart release of the inhibitor under presence of chloride ions. Figure 2 shows the XRD patterns of the AA2024 samples covered with LDH-V$_2$O$_7$ and immersed in 0.05 M NaCl solution for 2 weeks (4) and 1 month (5). The observed shift of the characteristic reflections (003) and (006) indicates a decrease of the basal plane spacing, certainly related to a substitution of V$_2$O$_7^{4-}$ by Cl$^-$. As opposed to the anion exchange NO$_3 \leftrightarrow$ V$_2$O$_7$, the Zn(2)-Al-V$_2$O$_7$ and Zn(2)-Al-Cl phases do not coexist during the exchange process. Instead, a new LDH phase appears with a basal spacing value intermediate between the values characteristic of these LDH phases (0.943 and 0.775 nm, respectively). These results suggest some sort of "solid solution" where V$_2$O$_7^{4-}$ anions are diluted with Cl$^-$. In the literature, there are some studies that shown that the basal spacing of a layered solid does not depend linearly on a molar ratio of the intercalated ions but exhibits a more complex (non-Vegard's-law) behavior. The relationship between basal spacing $d$ and composition $x$ (relative amount of the component with a higher $d$-value) is described by a superlinear function:

$$d_n(x) = 1 - (1 - x)^p \quad (1)$$

where $d_n$ is the normalized basal spacing, which is by definition

$$d_n(x) = \frac{d(x) - d(0)}{d(1) - d(0)} \quad (2)$$

and p is the so-called interlayer rigidity parameter. Using Eqs. 1 and 2, the values of x corresponding to the observed basal spacings of the $(x)$Zn(2)-Al-V$_2$O$_7$ - $(1-x)$Zn(2)-Al-Cl LDHs as described in Figure 2 were estimated. The parameter p was taken to be 5, as it has previously been determined for a series of the Zn(2)-Al-CO$_3$ - Zn(2)-Al-Cl LDHs. It was found that after 2 weeks of continuous immersion in NaCl, half of the V$_2$O$_7{}^{4-}$ anions have been substituted by Cl$^-$, while after 1 month of continuous immersion about 90% of V$_2$O$_7{}^{4-}$ were replaced by Cl$^-$. Thus, even after contact with a NaCl solution for a long period of time the LDH layer is still capable of storing and delivering on demand V$_2$O$_7{}^{4-}$ anions necessary to protect the substrate for higher immersion times.

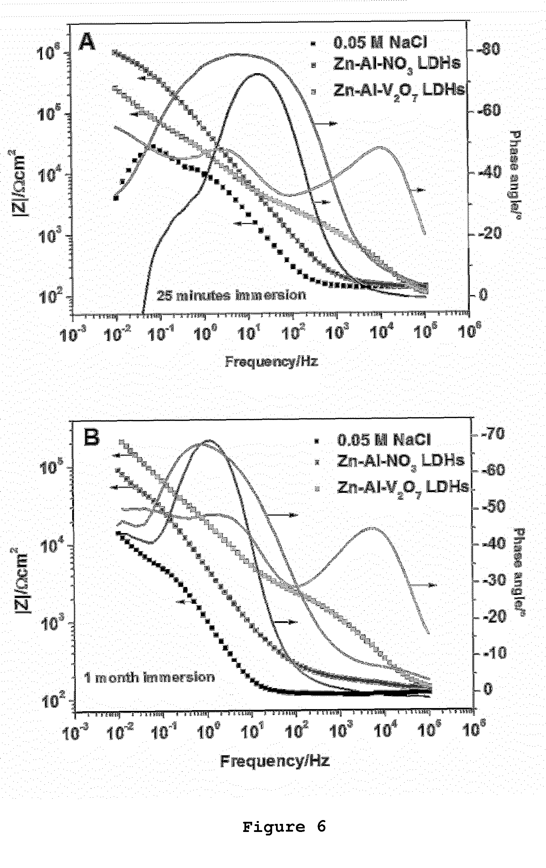

The Electrochemical Impedance Spectroscopy (EIS) spectra corresponding to the samples depicted in Figure 4 are presented in Figure 6. The EIS method allows quantitative analysis of the evolution of the corrosion relevant physical parameters during the accelerated immersion tests. For the sake of interpretation, the spectra are divided into three frequency regions according to the time-constants detected: region I (high frequencies $f$>10$^4$ Hz), region II (intermediate frequencies, $f$-10$^0$-10$^1$ Hz) and region III (low frequencies $f$-10$^{-2}$-10$^{-1}$ Hz). In the beginning of immersion, the substrate of AA2024 exhibits one time-constant at intermediate frequencies, assigned to the response of the electrochemical activity at the surface (corrosion processes). The scattering of points at low frequencies is associated with non-stationary conditions due to the active-passive localised corrosion activity. In the case of AA2024 plates covered with LDHs, the magnitude of impedance is considerably higher than for the bare substrate. For the substrate covered with Zn(2)-Al-NO$_3$ and Zn(2)-Al-V$_2$O$_7$, three time constants can be detected: one at high frequencies associated to the response of the LDH layer, a second one at intermediate frequencies associated with the response of the native oxide film, and one close to the low frequency end assigned to the corrosion activity.

The impedance values of region I are considerably lower for LDH-NO$_3$ films than for LDH-V$_2$O$_7$ at least one order of magnitude. The anion-exchange reaction brings opposing factors into play. In fact, one would expect that the LDH-NO$_3$ layer demonstrates better barrier properties than the LDH-V$_2$O$_7$ one, because of partial defragmentation of the LDH crystallites during the anion exchange resulting in some thinning-down of the layer. At the same time, the barrier properties are also dependent upon mobility of the ionic species in the intergallery space of LDH: NO$_3$ anions can move more easily in the galleries than V$_2$O$_7{}^{4-}$ anions, the latter being tightly held to the hydroxide layers. This factor could explain the difference in the barrier properties observed in favour of Zn(2)-Al-V$_2$O$_7$.

The most relevant results are those observed for long immersion times (1 month, panel B). The impedance of substrate AA2024 and alloy coated with LDH-NO$_3$ decreases about one order of magnitude with respect to the initial values. For the bare metal a steady state condition has been reached with the metal surface fully corroded, and covered with corrosion products as described in Figure 4A2. In this case two time constants are detected, at intermediate (associated with corrosion processes) and low frequencies (associated with controlled processes for mass transport). For the alloy covered with Zn(2)-Al-NO$_3$, three time constants are observed, two at intermediate frequencies and another one at low frequencies. The assignment of the time constants in the intermediate frequency range is not straightforward. From the values obtained from fittings (see results below) together with visual inspection of the plates, we reached the conclusion that the native aluminium oxide layer response was no longer detected, due to breakage as a result of corrosion attack (Figure 4B2: black pits and corrosion products are detected after 1 month of immersion). Then, the two time constants detected at intermediate frequencies are related to the response of surface deposits (~10 Hz) whilst the time constant at ~1 Hz is ascribed to corrosion activity and double layer response in the interface metal-solution. The low-frequency time constant is ascribed to processes controlled by mass transport.

Contrastingly, the variation of impedance of AA2024 coated with Zn(2)-Al-V$_2$O$_7$ is minor, resembling similar to the initial spectra depicted on panel A. The behaviour can be explained by the active corrosion protection provided by this LDH layer that stores corrosion inhibitor and gradually releases it in the presence of chloride ions. Moreover, the phase angle for the identified time constants does not surpass 50°, which can be due to diffusion controlled processes on going on the coated surface, with the existence of LDHs islands in the IMC phases, consequent though the limitation of oxygen reduction reaction.

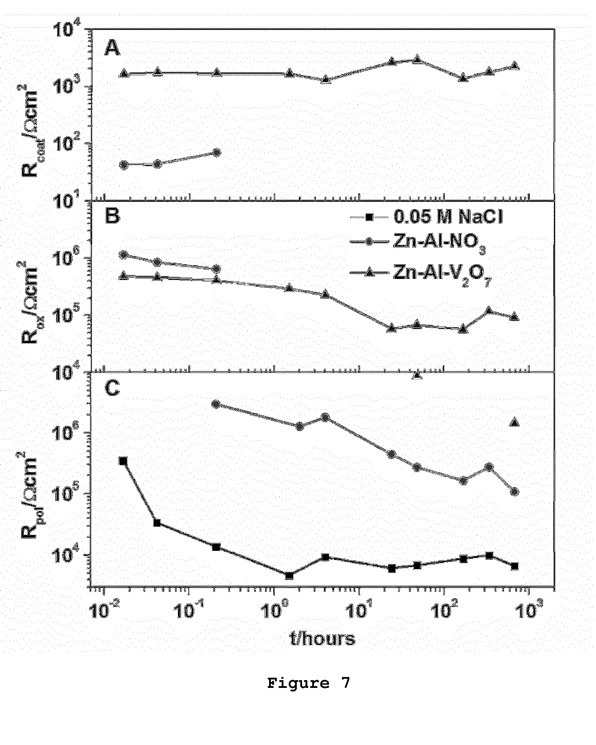

Figure 7 depicts the evolution of parameters extracted by fitting of EIS spectra using appropriate equivalent circuits. The differences in LDH coating resistance $R_{coat}$ between LDH-NO$_3$ and LDH-V$_2$O$_7$ were already addressed in the qualitative point of view. The graph displayed in Figure 7A shows that the difference in resistance is more than 1 order of magnitude, with LDH-V$_2$O$_7$ showing the highest values. In the case of LDH-NO$_3$, after 1 hour of immersion in NaCl the coating response is no longer detectable.

The aluminium oxide present on the alloy surface is the last barrier against aggressive species, and the oxide layer resistance ($R_{ox}$) gives an indication of the effectiveness of the active protection provided by inhibiting species as described by the Figure 7B. Initially, the highest $R_{ox}$ is the higher substrate covered with LDH-NO$_3$. This implies that the changes occurring in the native aluminium oxide with the additional step of anion exchange must be considered. In particular, the alkaline pH conditions used to control the desired speciation of vanadates for corrosion purposes (pH=8-9), may also contribute for the partial dissolution of aluminium oxide in the form of $AlO_2^-$. This dissolution could be accelerated during the exchange of nitrate and vanadate, when the electrical resistance in the pore gallery is low.

Nonetheless, after 1 hour of immersion, the $R_{ox}$ is no longer detected in the system for the LDH-$NO_3$, while in the case of LDH-$V_2O_7$ this parameter decreases at slower rate. More importantly, $R_{ox}$ starts to increase again after 1 week of immersion. This increase can be associated with some sort of self-healing of the aluminium oxide due to the presence of the corrosion inhibitor. With respect to the polarization resistance associated with occurrence of corrosion activity ($R_{pol}$), the results support the superior protection provided by LDH-$V_2O_7$ as described in Figure 7C. The missing points in the graph arise from the impossibility of quantifying the large $R_{pol}$. After 1 month of immersion $R_{pol}$ (LDH-$V_2O_7$) is 1 order of magnitude higher than $R_{pol}$ (LDH-$NO_3$) and 2 orders of magnitude higher than $R_{pol}$ (bare). The comparison of results for Zn(2)-Al-$NO_3$ and Zn(2)-Al-$V_2O_7$ systems emphasizes the importance of the presence of corrosion inhibitors to confer active corrosion protection to the aluminium substrate, especially for long immersion times. Additionally, the high surface area associated with the island-like morphology of these thin LDH structures is certainly an important parameter to favour the adhesion of subsequent coating layers.

## Experimental

Phase content and crystal structure of the samples were studied by X-ray diffraction (XRD). Diffraction data were collected at room temperature using a Philips X'Pert MPD diffractometer (Bragg-Brentano geometry, Cu K$\alpha$ radiation, tube power 40 kV, 50 mA; X'celerator detector, and the exposition corresponded to 11 s per step of 0.02° over the angular range $4 < 2\theta < 90°$).

Particle morphology and composition were characterized by Scanning Electron Microscopy with Energy Dispersive Spectroscopy (SEM-EDS) (Hitachi S-4100 microscope with electron beam energy of 25 kV).

EIS measurements were carried out in a three-electrode cell with a saturated calomel reference electrode, a platinum foil counter electrode and the aluminium alloy sample as the working electrode (exposed area of ca. 3 $cm^2$). The cell was placed in a Faraday cage to avoid the interference of external electromagnetic fields. The electrolyte was 0.05 M NaCl aqueous solution and the measurements were performed using a Gamry FAS2 Femtostat with PCI4 Controller. The selected frequency range was from $10^5$ to $10^{-2}$ Hz, with a 10 mV of sinusoidal perturbation with 10 points per frequency decade. All the spectra were recorded at open circuit potential.

The impedance plots were fitted using different equivalent circuits with the ZView software version 3.1c. The equivalent circuits used were based on RC circuits and the goodness of the fittings evaluated by the value of $\chi^2$ (lower than $7 \times 10^{-3}$).

The methodology hereby presented for the synthesis of LDHs-coated AA2024 (conversion films) was shown to allow the formation of a spatially-differentiated LDH structure, using the surface active points (located at IMC sites) of the aluminium alloy for this purpose, which are in fact the most important places to be protected from the corrosion standpoint. The resulting nanostructured layer is expected to provide good adhesion. The results demonstrate, for the first time, active corrosion protection by intercalation of corrosion inhibitors in a LDH protective layer. This simple methodology is easy to implement at industrial level as it does not require exotic conditions, being also environmentally-friendly. New type of self-healing protective coating systems can be developed integrating such LDH-container layers. Moreover, this concept can be easily applied to other fields such as biocide/anti-fouling protection, (bio)chemical sensors, or drug-delivery systems.

The following claims define additional preferred embodiments of the present invention.

## Claims

1. Conversion films **characterized by** comprising layered double hydroxides (LDHs) and corrosion inhibitors in the LDH nanocrystals.

2. Films according to the previous claim **characterized by** presenting island morphology with 8 micrometre thick surrounded by a uniform film of LDHs over the residual surface with 1-2 micrometre thick.

3. Process for preparation of conversion films described in the previous claims, **characterized by** being hydrothermal and comprises the following steps:

   a) preparation, washing and treatment of metallic substrates;
   b) immersion of substrates in ultra-sound for 5 minutes;
   c) drying of substrates;
   d) insertion of substrates in upright position in a $Zn(NO_3)_2$ solution;
   e) insertion of the substrates in the solution from the previous step altogether in a water bath for 100°C for 4h;
   f) washing of substrates with ultrapure water and ethanol/propanol and drying in air;
   g) intercalation of corrosion inhibitors;
   h) washing of substrates with ultrapure water and ethanol/propanol and drying in air.

4. Process according to previous claim **characterized by** substrates being aluminium alloys, magnesium, steel or zinc.

5. Process according to claim 3 **characterized by** the washing step consisting of washing with ultrapure water, followed by ethanol or propanol for removal of particles and grease.

6. Process according to claim 3 **characterized by** treatment being alkaline or alkaline and acid.

7. Process according to previous claim **characterized by** alkaline treatment consisting of 0.1 M NaOH during 1-2 minutes.

8. Process according to claim 6 **characterized by** alkaline and acid treatment comprising 0.1 M NaHO during 2 minutes and 0.1 M $HNO_3$ during 8 minutes.

9. Process according to claim 3 **characterized by** a solution of $Zn(NO_3)_2$ in step d) having variable concentration in the range 5-500 mM, with adjusted pH in neutral range between 6 and 7.

10. Process according to claim 3 **characterized by** immersion of substrates in a 0.1 M $NaVO_3$ solution with pH adjusted to 8.4 in step g), which then is placed in a water bath during 4h at 50°C.

11. Process according to claim 3 **characterized by** active species intercalated in LDHs comprising organic or inorganic corrosion inhibitors, biocides or other biologically-active species.

12. Process according to claim 3 **characterized by** using other soluble salts of metallic cations $Zn^{2+}$, $Cu^{2+}$, $Fe^{2+}$, $Fe^{3+}$, $Ni^{2+}$, $Al^{3+}$, instead of $Zn(NO_3)_2$ in step d).

13. Process according to claim 3 **characterized by** hydrothermal conditions in step e) consisting of 4-24h and temperature 50 to 100°C.

14. Films described in claims 1-2 and obtained by the process described in claims 3-13 are **characterized by** being used in corrosion protection, acting as reservoirs of active species, releasing them in a controlled way by ion exchange.

15. Films described in claims 1-2 and obtained by the process described in claims 3-13 are **characterized by** being used in protection of substrates used in aeronautical, automotive, maritime and heavy industry in general.

16. Films described in claims 1-2 and obtained by the process described in claims 3-13 are **characterized by** being used in protection of implants and prosthetics.

Figure 1

Figure 2

Figure 3

Figure 4

Figure 5

Figure 6

Figure 7

## INTERNATIONAL SEARCH REPORT

| | International application No |
|---|---|
| | PCT/IB2012/054103 |

**A. CLASSIFICATION OF SUBJECT MATTER**

INV. C23C22/68    C23C22/83    B82Y30/00
ADD.

According to International Patent Classification (IPC) or to both national classification and IPC

**B. FIELDS SEARCHED**

Minimum documentation searched (classification system followed by classification symbols)

C23C  B82Y

Documentation searched other than minimum documentation to the extent that such documents are included in the fields searched

Electronic data base consulted during the international search (name of data base and, where practicable, search terms used)

EPO-Internal, INSPEC, COMPENDEX, WPI Data

**C. DOCUMENTS CONSIDERED TO BE RELEVANT**

| Category* | Citation of document, with indication, where appropriate, of the relevant passages | Relevant to claim No. |
|---|---|---|
| X | FAZHI ZHANG ET AL: "Corrosion Resistance of Superhydrophobic Layered Double Hydroxide Films on Aluminum", ANGEWANDTE CHEMIE INTERNATIONAL EDITION, vol. 47, no. 13, 14 March 2008 (2008-03-14), pages 2466-2469, XP055048389, ISSN: 1433-7851, DOI: 10.1002/anie.200704694 cited in the application the whole document<br>-----<br>-/-- | 1,14-16 |

[X] Further documents are listed in the continuation of Box C.      [X] See patent family annex.

* Special categories of cited documents :

"A" document defining the general state of the art which is not considered to be of particular relevance

"E" earlier application or patent but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step when the document is taken alone

"Y" document of particular relevance; the claimed invention cannot be considered to involve an inventive step when the document is combined with one or more other such documents, such combination being obvious to a person skilled in the art

"&" document member of the same patent family

| Date of the actual completion of the international search | Date of mailing of the international search report |
|---|---|
| 20 December 2012 | 10/01/2013 |

| Name and mailing address of the ISA/ | Authorized officer |
|---|---|
| European Patent Office, P.B. 5818 Patentlaan 2 NL - 2280 HV Rijswijk Tel. (+31-70) 340-2040, Fax: (+31-70) 340-3016 | Mauger, Jeremy |

Form PCT/ISA/210 (second sheet) (April 2005)

**EP 2 743 377 A1**

## INTERNATIONAL SEARCH REPORT

| International application No |
| --- |
| PCT/IB2012/054103 |

**C(Continuation). DOCUMENTS CONSIDERED TO BE RELEVANT**

| Category* | Citation of document, with indication, where appropriate, of the relevant passages | Relevant to claim No. |
| --- | --- | --- |
| X | BUCHHEIT R G ET AL: "ACTIVE CORROSION PROTECTION IN Ce-MODIFIED HYDROTALCITE CONVERSION COATINGS", CORROSION, NACE INTERNATIONAL, HOUSTON, TX; US, US, vol. 1, no. 58, 1 January 2002 (2002-01-01), pages 3-14, XP001140903, ISSN: 0010-9312 "Experimental procedures", "Conclusions"; table 1 ----- | 1,14-16 |
| X | US 5 756 218 A (BUCHHEIT RUDOLPH G [US] ET AL) 26 May 1998 (1998-05-26) column 4, line 11 - column 6, line 10; claims ----- | 1,14-16 |
| A | XIAOXIAO GUO ET AL: "One-Step Hydrothermal Crystallization of a Layered Double Hydroxide/Alumina Bilayer Film on Aluminum and Its Corrosion Resistance Properties", LANGMUIR, vol. 25, no. 17, 1 September 2009 (2009-09-01), pages 9894-9897, XP055048437, ISSN: 0743-7463, DOI: 10.1021/la901012w cited in the application the whole document ----- | 1-16 |
| A | ZHELUDKEVICH M L ET AL: "Active protection coatings with layered double hydroxide nanocontainers of corrosion inhibitor", CORROSION SCIENCE, OXFORD, GB, vol. 52, no. 2, 1 February 2010 (2010-02-01), pages 602-611, XP026819767, ISSN: 0010-938X [retrieved on 2009-10-17] cited in the application the whole document ----- | 1-16 |
| X,P | TEDIM J ET AL: "Nanostructured LDH-container layer with active protection functionality", JOURNAL OF MATERIALS CHEMISTRY 20111021 ROYAL SOCIETY OF CHEMISTRY GBR, vol. 21, no. 39, 21 October 2011 (2011-10-21), pages 15464-15470, XP002689594, DOI: 10.1039/C1JM12463C the whole document ----- | 1-16 |

Form PCT/ISA/210 (continuation of second sheet) (April 2005)

17

## INTERNATIONAL SEARCH REPORT
Information on patent family members

| International application No |
| --- |
| PCT/IB2012/054103 |

| Patent document cited in search report | Publication date | Patent family member(s) | Publication date |
| --- | --- | --- | --- |
| US 5756218 A | 26-05-1998 | NONE | |

Form PCT/ISA/210 (patent family annex) (April 2005)

## REFERENCES CITED IN THE DESCRIPTION

### Patent documents cited in the description

- CN 101050539 A
- CN 100497745 C, ZHANG F, SUN M, DUAN X, XU S, ZHAO L
- CN 1908244 A, DUAN X, YANG L, TIAN Y, ZHANG F
- CN 101519782 A, XU CHEN, YU LEI, WENSHENG YANG
- CN 101285185 A, FAZHI ZHANG, LILI ZHAO, SAILONG XU, XUE DUAN
- US RE35576 E, BUCHHEIT JR RUDOLPH G, STONER GLENN E
- US 5266356 A, BUCHHEIT JR RUDOLPH G, STONER GLENN E
- CN 101597783 A, XIANG YU, JUNQING LI, WANG JUN, XIAOYAN JING, MILIN ZHANG

### Non-patent literature cited in the description

- **J.K. LIN ; C.L. HSIA ; J.Y. UAN.** Characterization of Mg,Al-hydrotalcite conversion film on Mg alloy and Cl- and CO32-anion-exchangeability of the film in a corrosive environment. *Scripta Materialia,* 2007, vol. 56, 927-930
- **F. ZHANG ; L. ZHAO ; H. CHEN ; S. XU ; D. G. EVANS ; X. DUAN.** Corrosion Resistance of Superhydrophobic Layered Double Hydroxide Films on Aluminum. *Angew. Chem. Int. Ed.,* 2008, vol. 47, 2466-2469
- **R.G. BUCHHEIT ; M.D. BODE ; G.E. STONER.** Corrosion-Resistant, Chromate-Free Talc Coatings for Aluminum. *Corrosion,* 1994, vol. 50, 205-214
- **J.-Y. UAN ; J.-K. LIN ; Y.-S. TUNG.** Direct growth of oriented Mg-Al layered double hydroxide film on Mg alloy in aqueous HCO3-/CO32- solution. *J. Mater. Chem.,* 2010, vol. 20, 761-766
- **J.-L. YI ; X.-M. ZHANG ; M.-A. CHEN ; R. GU.** Effect of Na2CO3 on corrosion resistance of cerium conversion film on Mg-Gd-Y-Zr magnesium alloy surface. *Scripta Materialia,* 2008, vol. 59, 955-958
- **J. WANG ; D. LI ; Q. LIU ; X. YIN ; Y. ZHANG ; X. JING ; M. ZHANG.** Fabrication of hydrophobic surface with hierarchical structure on Mg alloy and its corrosion resistance. *Electrochimica Acta,* 2010, vol. 55, 6897-6906
- **F. ZHANG ; M. SUN ; S. XU ; L. ZHAO ; B. ZHANG.** Fabrication of oriented layered double hydroxide films by spin coating and their use in corrosion protection. *Chemical Engineering Journal,* 2008, vol. 141, 362-367
- **H. CHEN ; F. ZHANG ; S. XU ; D. G. EVANS ; X. DUAN.** Facile Fabrication and Wettability of Nestlike Microstructure Maintained Mixed Metal Oxides Films from Layered Double Hydroxide Films Precursors. *Ind. Eng. Chem. Res.,* 2008, vol. 47, 6607-6611
- **R.G. BUCHHEIT ; H. GUAN.** Formation and Characteristics of Al-Zn Hydrotalcite Coatings on Galvanized Steel. *JCT Research,* 2004, vol. 1, 277-290
- **J.K. LIN ; J.Y. UAN.** Formation of Mg,Al-hydrotalcite conversion coating on Mg alloy in aqueous HCO3-/CO32- and corresponding protection against corrosion by the coating. *Corrosion Science,* 2009, vol. 51, 1181-1188
- **W. ZHANG ; R.G. BUCHHEIT.** Hydrotalcite Coating Formation on Al-Cu-Mg Alloys from Oxidizing Bath Chemistries. *Corrosion,* 2002, vol. 58, 591-600
- **J. WANG ; D. LI ; X. YU ; X. JING ; M. ZHANG ; Z. JIANG.** Hydrotalcite conversion coating on Mg alloy and its corrosion resistance. *Journal of Alloys and Compounds,* 2010, vol. 494, 271-274
- **H. CHEN ; F. ZHANG ; S. FU ; X. DUAN.** In Situ Microstructure Control of Oriented Layered Double Hydroxide Monolayer Films with Curved Hexagonal Crystals as Superhydrophobic Materials. *Adv. Mater.,* 2006, vol. 18, 3089-3093
- **X. GUO ; S. XU ; L. ZHAO ; W. LU ; F. ZHANG ; D. G. EVANS ; X. DUAN.** One-Step Hydrothermal Crystallization of a Layered Double Hydroxide/Alumina Bilayer Film on Aluminum and Its Corrosion Resistance Properties. *Langmuir,* 2009, vol. 25, 9894-9897
- **R.B. LEGGAT ; W. ZHANG ; R.G. BUCHHEIT ; S.R. TAYLOR.** Performance of Hydrotalcite Conversion Treatments on AA2024-T3 When Used in a Coating System. *Corrosion,* 2002, vol. 58, 322-328

- **M.L. ZHELUDKEVICH ; S.K. POZNYAK ; L.M. RODRIGUES ; D. RAPS ; T. HACK ; L.F. DICK ; T. NUNES ; M.G.S. FERREIRA.** Active protection coatings with layered double hydroxide nanocontainers of corrosion inhibitor. *Corros. Sci.,* 2010, vol. 52, 602-611